# EUROPÄISCHE PATENTSCHRIFT

(11) **EP 4 482 224 B1**
(45) Veröffentlichungstag und Bekanntmachung des Hinweises auf die Patenterteilung: **08.07.2026**
(21) Anmeldenummer: 24171542.4
(22) Anmeldetag: 22.04.2024
(51) Int. Cl.: H04W 52/02, H04W 84/18

(54) **VERFAHREN ZUM BETRIEB EINES BATTERIEBETRIEBENEN FUNKKNOTENS**
METHOD OF OPERATING A BATTERY POWERED RADIO NODE
PROCÉDÉ DE FONCTIONNEMENT D'UN NOEUD RADIO ALIMENTÉ PAR BATTERIE

(30) Priorität: 04.05.2023 DE 102023111684
(43) Veröffentlichungstag der Anmeldung: 25.12.2024
(73) Patentinhaber: Diehl Metering Systems GmbH, 90451 Nürnberg (DE)
(72) Erfinder: Joppich-Dohlus, Petra, 91080 Rathsberg (DE); Schmidt, Achim, 91367 Weißenohe (DE); Elberskirch, Dominik, 90482 Nürnberg (DE); Wechsler, Johannes, 91174 Spalt (DE)
(74) Vertreter: Diehl Patentabteilung

(56) Entgegenhaltungen:
- US-A1- 2021 051 591
- FARRELL S ET AL: "Low-Power Wide Area Network (LPWAN) Overview; rfc8376.txt", LOW-POWER WIDE AREA NETWORK (LPWAN) OVERVIEW; RFC8376.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 June 2018 (2018-06-01), pages 1 - 43, XP015126337

## Beschreibung

Die vorliegende Erfindung betrifft ein Verfahren zum Betrieb eines batteriebetriebenen Funkknotens gemäß dem Oberbegriff des Anspruchs 1 sowie einen Funkknoten gemäß dem Oberbegriff des Anspruchs 16.

### Technologischer Hintergrund

Die Erfindung betrifft ein Verfahren zum Betrieb eines batteriebetriebenen Funkknotens, welcher ein Low Power Wide Area Network (LPWAN)-Netzwerkprotokoll unterstützt, beispielsweise das Long Range Wide Area Network (LoRaWAN)-Netzwerkprotokoll, wie es z. B. in der LoRaWAN L2 1.0.4 Spezifikation (TS001-1.0.4) beschrieben ist, oder das MIOTY-Netzwerkprotokoll, wie es z. B. in der ETSI TS 103 357 V1.1.1 (2018-06) beschrieben ist, unterstützt. Dies bedeutet, dass sich der Funkknoten mit einem LPWAN verbinden kann. Hierbei handelt es sich um ein Funknetzwerk, welches lizenzfreie Frequenzbänder nutzt. In einem derartigen Netzwerk sind eine Vielzahl von Funkknoten vorgesehen, die per Funk jeweils mit mindestens einem Gateway über eine bidirektionale Datenübertragung kommunizieren. Das Gateway leitet die von den Funkknoten empfangenen Daten an einen LPWAN-Server weiter. Bei der bidirektionalen Datenübertragung werden Datentelegramme im Uplink von dem Funkknoten über das Gateway an den LPWAN-Server gesendet und im Downlink von dem LPWAN-Server über das Gateway an den Funkknoten gesendet. Zudem ist in dem LPWAN ein Application-Server bzw. Anwendungsserver vorgesehen, der die Funkknoten-Daten vom LPWAN-Server erhält und diese verarbeitet.

Bei einem Funkknoten kann es sich um eine Sensoreinrichtung zur Erfassung von Daten jeglicher Art, um eine Aktoreinrichtung zur Vornahme bestimmter Handlungen oder Maßnahmen oder um eine Kombination einer Sensoreinrichtung und einer Aktoreinrichtung handeln. Derartige Funkknoten werden mit einer eigenen, d.h. autarken, Energieversorgung, vorzugsweise einer langzeitenergieautarken Energieversorgung, in Form einer Batterie, z. B. einer Longlife-Batterie, betrieben, die eine begrenzte, vom individuellen Energieverbrauch des Funkknotens abhängige Lebensdauer hat und nicht wieder aufladbar ist, sondern zum Ende der Lebensdauer ausgetauscht werden muss. Im Normalfall kann mit einer derartigen Batterie eine Standzeit "im Feld" von mehreren Jahren, insbesondere mindestens zehn Jahren, erreicht werden, bis ein Austausch notwendig wird.

Um innerhalb des LPWAN zu kommunizieren, muss der Funkknoten diesem mittels eines Beitrittsvorgangs beitreten. Ein Beitrittsvorgang umfasst eine Beitrittsanfrage und eine Beitrittsbestätigung. Hierbei übermittelt der Funkknoten die Beitrittsanfrage an einen Beitrittsserver des LPWAN, um den Beitrittsvorgang zu starten. Im Anschluss an das Aussenden der Beitrittsanfrage öffnet der Funkknoten mindestens ein Empfangsfenster, um die Beitrittsbestätigung zu empfangen. Der Beitrittsserver übermittelt die Beitrittsbestätigung an den Funkknoten als Antwort auf die Beitrittsanfrage des Funkknotens, wenn dieser dem LPWAN beitreten darf. Die Beitrittsbestätigung wird vom Funkknoten innerhalb des mindestens einen Empfangsfensters empfangen. Sobald der Funkknoten die Beitrittsbestätigung erhalten hat, kann er über das LPWAN kommunizieren.

Der Beitrittsvorgang kann in unterschiedlichen Fällen durchgeführt werden. Beispielsweise wird der Beitrittsvorgang bei einem initialen Start des Funkknotens durchgeführt, damit der Funkknoten erstmalig einem LPWAN beitreten kann. Zudem kann ein Beitrittsvorgang durchgeführt werden, wenn der Funkknoten über einen gewissen Zeitraum keine Downlink-Übertragungen mehr von dem LPWAN-Server empfangen hat. Ferner kann ein Beitrittsvorgang durchgeführt werden, wenn der Funkknoten rekonfiguriert bzw. neu konfiguriert wird, z. B. wenn er aus einem LPWAN entfernt wird und einem anderen LPWAN beitreten soll.

In manchen Fällen wird ein Beitrittsvorgang zwar vom Funkknoten gestartet, indem er die Beitrittsanfrage aussendet, jedoch wird der Beitrittsvorgang nicht erfolgreich abgeschlossen, weil der Funkknoten keine Beitrittsbestätigung vom Beitrittsserver empfängt. In solchen Fällen versucht der Funkknoten weiterhin dem LPWAN beizutreten und sendet immer wieder eine Beitrittsanfrage aus. Durch das andauernde Aussenden von Beitrittsanfragen verbraucht der Funkknoten Energie.

Die US 2021/0051591 A1 offenbart ein Verfahren zum Energiemanagement. Das Verfahren kann für eine bidirektionale Datenübertragung in einem Long Range Wide Area Network (LoRaWAN) vorgesehen sein. Auf Basis gemessener Übertragungswerte, kann der Energiebedarf ermittlet werden.

### Aufgabe der vorliegenden Erfindung

Aufgabe der vorliegenden Erfindung ist es, ein Verfahren zum Betrieb eines batteriebetriebenen Funkknotens zur Verfügung zu stellen, mit welchem der Energieverbrauch des Funkknotens reduziert werden kann.

### Lösung der Aufgabe

Die vorstehende Aufgabe wird durch ein Verfahren mit den Merkmalen des Anspruchs 1 sowie durch einen Funkknoten gemäß Anspruch 16 gelöst. Zweckmäßige Ausgestaltungen des erfindungsgemäßen Verfahrens und des Funkknotens werden in den zugehörigen abhängigen Ansprüchen beansprucht.

Erfindungsgemäß ist ein Verfahren zum Betrieb eines batteriebetriebenen Funkknotens vorgesehen, wobei der Funkknoten ein Low Power Wide Area Network (LPWAN)-Netzwerkprotokoll, insbesondere das Long Range Wide Area Network (LoRaWAN)-Netzwerkprotokoll oder das MIOTY-Netzwerkprotokoll, unterstützt, wobei der Funkknoten zum Verbindungsaufbau mit einem LPWAN mindestens einen Beitrittsvorgang, insbesondere einen Join-Vorgang, startet. Hierbei sendet der Funkknoten für den Beitrittsvorgang eine Beitrittsanfrage an einen Beitrittsserver, insbesondere ein Join-Request an einen Join-Server oder ein attach request an ein service center, des LPWAN aus, um den Beitrittsvorgang zu starten, wobei der Funkknoten nach dem Aussenden der Beitrittsanfrage mindestens ein Empfangsfenster öffnet, insbesondere um eine Beitrittsbestätigung von dem Beitrittsserver, insbesondere ein Join-Accept von dem Join-Server oder ein attach accept von dem service center, des LPWAN zu empfangen, wobei der Beitrittsanfrage, vorzugsweise dem Aussenden der Beitrittsanfrage, ein, insbesondere vorbestimmter, Energieverbrauch zugewiesen wird, wobei der der Beitrittsanfrage zugewiesene Energieverbrauch in ein Energiebudget, insbesondere des Funkknotens, eingeht, und wobei in Abhängigkeit des, insbesondere aktuellen, Energiebudgets das Aussenden oder Nicht-Aussenden einer Beitrittsanfrage gesteuert wird.

Dass der Funkknoten das LPWAN-Netzwerkprotokoll unterstützt, bedeutet, dass der Funkknoten in der Lage ist, sich mit einem LPWAN zu verbinden und innerhalb dieses LPWAN mit weiteren Netzwerkmitgliedern bzw. Netzwerkgeräten zu kommunizieren. Bei dem zugewiesenen Energieverbrauch handelt sich z. B. um eine bestimmte Menge an elektrischer Energie oder elektrischer Leistung, welche insbesondere von der Datenrate bzw. des Spreizfaktors der Beitrittsanfrage abhängt. Auf Basis des Energiebudgets kann der Funkknoten erfindungsgemäß steuern, ob eine Beitrittsanfrage ausgesendet werden soll oder nicht. Zweckmäßigerweise wird bei Erreichen bzw. Unterschreiten eines vorbestimmten Levels bzw. Werts des Energiebudgets das Aussenden einer Beitrittsanfrage gestoppt bzw. pausiert und/oder weitere Energieeinsparmaßnahmen durchgeführt. Ein Entscheidungskriterium kann hierbei beispielsweise die aktuelle Kapazität der Batterie und/oder der Energieverbrauch in der letzten Zeit, z. B. der letzten Stunde(n) oder des letzten Tages, und/oder die Anzahl der bereits gestarteten Beitrittsvorgänge und/oder der Ablauf einer vorbestimmten Zeit seit dem erstmaligen Starten eines Beitrittsvorgangs sein. Durch ein Nicht-Aussenden einer Beitrittsanfrage kann der Funkknoten Energie einsparen. Infolgedessen kann eine ausreichende "Standzeit" des Funkknotens von mehreren Jahren, insbesondere von mindestens zehn Jahren, gewährleistet werden.

Vorzugsweise hängt der zugewiesene Energieverbrauch von der Übertragungsdauer der Beitrittsanfrage ab. Aufgrund der Übertragungsdauer kann der Funkknoten basierend auf der für die Übertragung benötigten Energie pro Zeiteinheit den Energieverbrauch der Beitrittsanfrage ermitteln. Hierdurch kann der Energieverbrauch sehr genau bestimmt werden.

Zweckmäßigerweise umfasst der zugewiesene Energieverbrauch zusätzlich den Energieverbrauch für das Öffnen des mindestens einen Empfangsfensters. Beispielsweise kann der zugewiesene Energieverbrauch zudem den Energieverbrauch für das Empfangen einer Beitrittsbestätigung umfassen. Hierbei spiegelt der Energieverbrauch alle Schritte eines Beitrittsvorgangs wieder.

Insbesondere hängt der zugewiesene Energieverbrauch der Empfangsfenster von der aktiven Zeit des Funkknotens im Empfangsmodus ab. Aufgrund der Zeitdauer des Funkknotens im Empfangsmodus kann der Funkknoten basierend auf der für die aktive Zeit bzw. den Empfangsmodus benötigten Energie pro Zeiteinheit den benötigten Energieverbrauch ermitteln. Hierdurch kann der Energieverbrauch sehr genau bestimmt werden.

Vorteilhafterweise wird der zugewiesene Energieverbrauch empirisch ermittelt oder geschätzt. Insbesondere handelt es sich bei dem zugewiesenen Energieverbrauch um das arithmetische Mittel des Energiebedarfs des Aussendens einer Beitrittsanfrage und/oder des Öffnens der mindestens zwei Empfangsfenster und/oder des Empfangens einer Beitrittsbestätigung, welcher bei unterschiedlichen Einbausituationen und/oder Umgebungsbedingungen, z. B. unterschiedliche Temperaturen und/oder unterschiedliche Luftfeuchten, vorzugsweise experimentell, bestimmt wird. Alternativ kann der zugewiesene Energieverbrauch auch in Bezug auf eine geographische Einbausituation des Funkknotens, z. B. in warmen Regionen oder in kalten Regionen, geschätzt werden.

Zweckmäßigerweise wird das Energiebudget als Credit-Punkte-System geführt, welches einen Credit-Punkte-Stand umfasst. Der Credit-Punkte-Stand stellt eine Anzahl von Credit-Punkten dar und spiegelt die dem Funkknoten momentan zur Verfügung stehende elektrische Energie oder elektrische Leistung wieder. Hierbei entspricht ein Credit-Punkt bzw. der Credit-Punkte-Stand z. B. einer bestimmten Menge an elektrischer Energie oder elektrischer Leistung. Auf Basis der verfügbaren Energie kann Einfluss auf das Aussenden oder Nicht-Aussenden einer Beitrittsanfrage genommen werden und der Strom- bzw. Energieverbrauch des Funkknotens effektiv begrenzt werden. So kann z. B. bei einem niedrigen Credit-Punkte-Stand eine Beitrittsanfrage nicht ausgesendet werden. Zweckmäßigerweise spiegelt der Credit-Punkte-Stand lediglich das Energiebudget der Beitrittsanfrage bzw. des Beitrittsvorgangs wieder. Alternativ kann der Credit-Punkte-Stand das Gesamtenergiebudget des Funkknotens, z. B. das gesamte Energiebudget der Funkkommunikation, darstellen.

Vorteilhafterweise ist der dem Aussenden der Beitrittsanfrage und/oder dem Öffnen des mindestens einen Empfangsfensters und/oder dem Empfangen der Beitrittsbestätigung zugewiesene Energieverbrauch einer vorbestimmten Zahl von Credit-Punkten zugeordnet. Die Zahl von Credit-Punkten entspricht insbesondere dem Energiebedarf einer Beitrittsanfrage und dem Öffnen des mindestens einen Empfangsfensters.

Zweckmäßigerweise wird der, vorzugsweise aktuelle, Credit-Punkte-Stand des Funkknotens wegen Aussendung einer Beitrittsanfrage um die vorbestimmte Zahl von Credit-Punkten reduziert, z. B. durch Abziehen oder durch Subtraktion. Hierdurch wird die vom Funkknoten verbrauchte Energie auch im Credit-Punkte-Stand berücksichtigt. Insbesondere wird der Credit-Punkte-Stand vor dem Aussenden einer Beitrittsanfrage, also vor dem Starten des Beitrittsvorgangs, um die dafür vorbestimmte Zahl von Credit-Punkten reduziert.

Zweckmäßigerweise kann, insbesondere während des Betriebs des Funkknotens mit dem Credit-Punkte-System, der Credit-Punkte-Stand des Funkknotens pro verstrichener Zeiteinheit, vorzugsweise fortlaufend, um eine vorbestimmte Zahl von Credit-Punkten erhöht werden, z. B. durch Zurechnung oder Addition. Beispielsweise handelt es sich bei der Zeiteinheit um Sekunden, Minuten, Stunden oder Tage. Hierdurch wird die dem Funkknoten für einen Beitrittsvorgang aktuell zur Verfügung stehende Energie pro Zeiteinheit erhöht. Insbesondere wird dem Gerät über die gesamte Lebensdauer ein bestimmtes Energiebudget zur Verfügung gestellt, welches durch die fortlaufende Erhöhung der Credit-Punkte nicht überschritten wird.

Indem keine Beitrittsanfrage ausgesendet wird, wenn der Credit-Punkte-Stand des Funkknotens einen Grenzwert erreicht bzw. unterschreitet, sendet der Funkknoten keine Funksignale aus, wodurch Energie eingespart werden kann.

Zweckmäßigerweise wird eine weitere Beitrittsanfrage ausgesendet, wenn der Funkknoten innerhalb des mindestens einen Empfangsfensters keine Beitrittsbestätigung von dem Beitrittsserver empfängt. Hierdurch startet der Funkknoten weitere Verbindungsversuche mit dem LPWAN und ein Verbindungsaufbau mit dem LPWAN wird mehrmals, insbesondere fortlaufend, versucht. Insbesondere werden mit einem erfolgreichen Abschluss des Beitrittsvorgangs, also das Empfangen der Beitrittsbestätigung durch den Funkknoten, keine weiteren Beitrittsvorgänge gestartet. Vorzugsweise wird das Aussenden von Beitrittsanfragen gestoppt, sobald ein gewisses Level oder ein Wert des Credit-Punkte-Stands des Energiebudgets unterschritten oder erreicht wird.

Zweckmäßigerweise werden in Abhängigkeit des Energiebudgets mehrere Beitrittsanfragen gebündelt in Form eines Bursts ausgesendet. Bei einem Burst werden mehrere Beitrittsanfragen in kurzen Zeitabständen nacheinander ausgesendet. Es handelt sich somit um eine kurzzeitige Häufung von Beitrittsanfragen. Vorzugsweise umfasst ein Burst fünf gebündelte Beitrittsanfragen.

Indem mehrere Bursts ausgesendet werden, werden fortlaufend Beitrittsvorgänge gestartet, sodass ein Verbindungsaufbau mit dem LPWAN mehrfach, insbesondere fortlaufend, versucht wird. Vorzugsweise sind die Bursts zeitlich beabstandet zueinander, sodass der Funkknoten zwischen den Bursts keine Beitrittsanfrage aussendet. Somit werden die Bursts in einem Intervall bzw. periodisch ausgesendet. Beispielsweise verlängert sich die Zeitspanne zwischen zwei aufeinanderfolgenden Beitrittsanfragen mit zunehmender Anzahl von Bursts. Infolgedessen verlängert sich das Intervall, in welchem die Bursts ausgesendet werden. Durch ein Ansteigen der Zeitdauer bzw. dem verlängern des Intervalls zwischen zwei Bursts wird in einfacher Weise Energie eingespart, da der Funkknoten seltener Beitrittsanfragen aussendet. Zweckmäßigerweise ist der Funkknoten zwischen zwei Bursts in einem Ruhemodus bzw. Sleepmodus, in welchem insbesondere lediglich die Funkaktivität des Funkknotens heruntergefahren bzw. abgeschaltet ist, während andere Aktivitäten, wie z. B. Sensoraktivitäten und/oder Aktoraktivitäten, weiterhin gewährleistet sind. Infolgedessen wird der Energieverbrauch des Funkknotens weiter reduziert.

Dadurch, dass in Abhängigkeit des Energiebudgets nach einer vorbestimmten Anzahl von ausgesendeten Beitrittsanfragen oder von ausgesendeten Beitrittsanfragen pro Zeit oder nach Ablauf einer vorbestimmten Zeit das Aussenden von Beitrittsanfragen pausiert wird, wird nach der vorbestimmten Anzahl nicht-erfolgreicher Beitrittsvorgänge oder Beitrittsvorgänge pro Zeit oder nach Ablauf der Zeit keine Beitrittsanfrage mehr ausgesendet, wodurch Energie eingespart wird. Das Aussenden der Beitrittsanfragen wird somit für eine vorbestimmte Zeit pausiert und nach Ablauf der Zeit fortgesetzt. Der Ablauf der Zeit bezieht sich vorzugsweise auf eine bestimmte Zeitspanne ab dem, insbesondere erstmaligen, Aussenden einer Beitrittsanfrage während des aktuell durchgeführten Verbindungsaufbaus. Zweckmäßigerweise versetzt sich der Funkknoten beim Aussetzen der Beitrittsvorgänge in den Ruhemodus bzw. Sleepmodus, in welchem lediglich die Funkkommunikation des Funkknotens heruntergefahren ist. Hierdurch kann der Funkknoten in einfacher Weise Energie einsparen.

Zweckmäßigerweise sendet der Funkknoten in einem vorbestimmten Zeitraum keine Beitrittsanfragen aus. Während dieses Zeitraums versetzt sich der Funkknoten vorzugsweise in den Ruhemodus bzw. Sleepmodus.

Vorzugsweise unterstützt der Funkknoten ein zweites Netzwerkprotokoll, sodass der Funkknoten zusätzlich zu dem LPWAN-Netzwerkprotokoll als erstes Netzwerkprotokoll über ein weiteres Netzwerkprotokoll kommunizieren kann und in ein weiteres Netzwerk eingebunden werden kann. Hierdurch stehen dem Funkknoten mehrere Kommunikationsmöglichkeiten zur Verfügung. Zweckmäßigerweise ist entweder das erste Netzwerkprotokoll oder das zweite Netzwerkprotokoll aktiv. Der Funkknoten kann also zu einem bestimmten Zeitpunkt nur über ein Netzwerkprotokoll kommunizieren. Hierbei werden in einfacher Weise der Duty Cylce eingehalten und/oder Interferenzen vermieden.

Vorzugsweise ist das zweite Netzwerkprotokoll M-Bus, wie es z. B. in der DIN EN 13757, vorzugsweise in der DIN EN 13757-4:2019-09, beschrieben ist. Bevorzugt handelt es sich hierbei um den M-BUS "Compact Mode" Mode C, wie er z. B. in der DIN EN 13757, vorzugsweise in der DIN EN 13757-4:2019-09, beschrieben ist.

Zweckmäßigerweise wird das mindestens eine Empfangsfenster in einem bestimmten Zeitabstand nach dem Ende des Aussendens der Beitrittsanfrage geöffnet, wodurch dem Beitrittsserver, insbesondere Join-Server oder service center, ausreichend Zeit für das Aussenden einer Beitrittsbestätigung als Antwort auf die Beitrittsanfrage zur Verfügung gestellt wird. Beispielsweise beträgt der Zeitabstand für ein erstes Empfangsfenster zwischen 1 s und 15 s ab dem Ende des Aussendens der Beitrittsanfrage.

Insbesondere sind ein erstes und ein zweites Empfangsfenster vorgesehen, wobei das zweite Empfangsfenster geöffnet wird, wenn innerhalb des ersten Empfangsfensters keine Beitrittsbestätigung empfangen wird. Dies schafft ein zusätzliches Energieeinsparpotential, da das zweite Empfangsfenster lediglich dann geöffnet wird, wenn innerhalb des ersten Empfangsfensters keine Beitrittsbestätigung empfangen wird. Sollte im ersten Empfangsfenster eine Beitrittsbestätigung empfangen werden, wird das zweite Empfangsfenster entsprechend nicht geöffnet. Zweckmäßigerweise wird das zweite Empfangsfenster zwischen 2 s und 16 s nach dem Ende des Aussendens der Beitrittsanfrage geöffnet. Insbesondere sind das erste Empfangsfenster und das zweite Empfangsfenster nicht gleichzeitig, sondern zeitlich versetzt zueinander geöffnet.

Vorteilhafterweise wird das zweites Empfangsfenster zeitlich beabstandet zu dem ersten Empfangsfenster geöffnet.

Zweckmäßigerweise geht der Funkknoten nach dem Aussenden der Beitrittsanfrage und/oder nach dem Schließen eines Empfangsfensters und/oder nach dem Empfangen der Beitrittsbestätigung und/oder nach einem Burst in den Ruhemodus bzw. Sleepmodus über.

Zweckmäßigerweise wird das Aussenden oder Nicht-Aussenden der Beitrittsanfrage von einer Steuerungseinheit des Funkknotens gesteuert. Hierdurch kann das Verfahren, insbesondere selbsttätig, vom Funkknoten gesteuert werden. Das Verfahren kann somit unabhängig von einem Gateway und/oder einem LPWAN-Server und/oder dem Beitrittsserver und/oder einem Application-Server gesteuert werden.

Zweckmäßigerweise handelt es sich bei dem Low Power Wide Area Network (LPWAN)-Netzwerkprotokoll um das Long Range Wide Area Network (LoRaWAN)-Netzwerkprotokoll, wie es z. B. in der LoRaWAN L2 1.0.4 Spezifikation (TS001-1.0.4) beschrieben ist, oder um das MIOTY-Netzwerkprotokoll, wie es z. B. in der ETSI TS 103 357 V1.1.1 (2018-06) beschrieben ist.

Die vorliegende Erfindung betrifft darüber hinaus einen Funkknoten gemäß dem Oberbegriff des Anspruchs 16. Erfindungsgemäß umfasst der Funkknoten eine Antenne, eine Steuerungseinheit, eine Batterie sowie eine Sensoreinrichtung und/oder eine Aktoreinrichtung, wobei der Funkknoten zur Durchführung des Verfahrens nach einem Ansprüche 1-15 hergerichtet ist.

Zweckmäßigerweise ist der Funkknoten eine Sensoreinrichtung, insbesondere ein Verbrauchszähler zur Messung des Stromverbrauchs oder des Gasverbrauchs oder des Wasserverbrauchs. Alternativ kann es sich bei dem Funkknoten um eine Aktoreinrichtung zur Vornahme bestimmter Handlungen oder Maßnahmen oder um eine Kombination einer Sensoreinrichtung und einer Aktoreinrichtung handeln.

Zweckmäßigerweise kann der Funkknoten in den lizenzfreien ISM-Bändern bzw. SRD-Bändern, vorzugsweise in einem Frequenzband im Bereich von 865,0-868,0 MHz oder 868,0-868,6 MHz oder 869,4-869,65 MHz oder 902-928 MHz, betrieben werden.

### Beschreibung der Erfindung anhand von Ausführungsbeispielen

Zweckmäßige Ausgestaltungen der vorliegenden Erfindung werden anhand von Zeichnungsfiguren nachstehen näher erläutert. Es zeigen:
- Fig. 1: eine stark vereinfachte schematische Darstellung eines Long Range Wide Area Networks (LoRaWAN);
- Fig. 2: eine stark vereinfache schematische Darstellung eines beispielhaften Funkknotens;
- Fig. 3a-e: stark vereinfachte Darstellungen des Ablaufs eines Beitrittsvorgangs;
- Fig. 4: ein beispielhafter Verlauf eines Credit-Punkte-Stands des Funkknotens gemäß Fig. 2 über die Zeit; sowie
- Fig. 5: eine beispielhafte Darstellung von mehreren zu einem Burst zusammengefassten Beitrittsanfragen.

Die Figuren zeigen zweckmäßige Ausgestaltungen der Erfindung anhand eines Long Range Wide Area Networks (LoRaWAN) 1. Das erfindungsgemäße Verfahren kann allerdings auch für andere Low Power Wide Area Network (LPWAN)-Netzwerkprotokolle, wie z. B. das MIOTY-Netzwerkprotokoll, verwendet werden

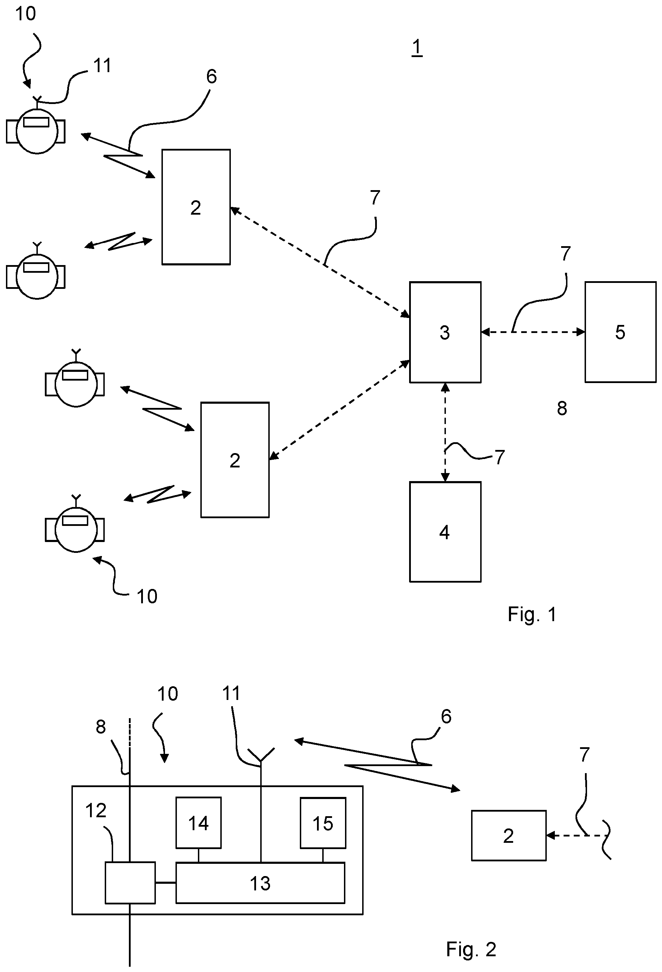

Fig. 1 zeigt eine stark vereinfachte schematische Darstellung eines Long Range Wide Area Networks (LoRaWAN) 1. Das dargestellte LoRaWAN 1 umfasst mehrere Funkknoten 10 mit einer Antenne 11, zwei Gateways 2, einen Network-Server 3 bzw. Netzwerk-Server, einen Application-Server bzw. Anwendungs-Server 5 sowie einen Beitrittsserver 4, insbesondere Join-Server. Der Funkknoten 10 unterstützt das Long Range Wide Area Network (LoRaWAN)-Netzwerkprotokoll. Das heißt, der Funkknoten 10 ist technisch dazu hergerichtet, innerhalb eines LoRaWAN 1 mit weiteren Teilnehmern des LoRaWAN 1 über das LoRaWAN zu kommunizieren.

Die Funkknoten 10 kommunizieren mit den Gateways 2 über eine funkbasierte Datenübertragung 6. Hierbei kommunizieren die beiden oberen Funkknoten 10 mit dem oberen Gateway 2 und die zwei unteren Funkknoten 10 mit dem unteren Gateway 2. Die Gateways 2 kommunizieren mit dem Network-Server 3 über eine funkbasierte oder kabelgebundene Datenübertragung 7. Alternativ kann bzw. können in dem LoRaWAN 1 nur ein Gateway 2 oder mehr als zwei Gateways 2 vorgesehen sein.

Zwischen einem einzelnen Funkknoten 10 und dem LoRaWAN-Server 3 findet eine bidirektionale Datenübertragung über das mit dem einzelnen Funkknoten 10 kommunizierende Gateway 2 statt. Hierbei werden Daten in Form eines Datentelegramms oder eines Teils eines Datentelegramm oder eines Kommandos oder eines Teils eines Kommandos in einer Uplink-Übertragung von dem Funkknoten 10 über die funkbasierte Datenübertragung 6 an das Gateway 2 übertragen und von dort aus über die funk- oder kabelbasierte Datenübertragung 7 an den Network-Server 3 weitergeleitet. Die Daten der Uplink-Übertragung werden insbesondere von dem Network-Server 3 an den Application-Server 5 übertragen.

Bei einer Downlink-Übertragung werden Daten in Form eines Datentelegramms oder eines Teils eines Datentelegramms oder eines Kommandos oder eines Teils eines Kommandos vom Network-Server 3 über die Datenübertragung 7 an das Gateway 2 übertragen und von dort aus über die Datenübertragung 6 an den Funkknoten 10 weitergeleitet.

Beispielsweise kann die Datenübertragung bei der Uplink-Übertragung und/oder der Downlink-Übertragung zwischen dem Funkknoten 10 und Network-Server 3 auch über mehrere (in den Figuren nicht dargestellte) Gateways 2 erfolgen.

Der Funkknoten 10 wird über eine Batterie 15 mit Energie versorgt, vgl. Fig. 2. Bei der Batterie 15 kann es sich um eine Longlife-Batterie handeln, welche erst zum Ende der Lebensdauer ausgetauscht werden muss. Im Normalfall kann mit einer derartigen Longlife-Batterie eine langzeitenergieautarke Energieversorgung über mehrere Jahre gewährleistet werden. Hierdurch erreicht der Funkknoten 10 z. B. eine Standzeit "im Feld" von mindestens zehn Jahren. Zweckmäßigerweise ist die Batterie 15 fest in dem Funkknoten 10 installiert, sodass zum Ende der Lebensdauer der Batterie 15 der komplette Funkknoten 10 ausgetauscht werden muss.

Der Funkknoten 10 umfasst zudem eine Steuerungseinheit 13 sowie einen Speicher 14. Bei dem in Fig. 2 gezeigten Funkknoten 10 handelt es sich um eine Sensoreinrichtung zur Erfassung von Daten jeglicher Art. Hierfür umfasst der Funkknoten 10 einen an einer Versorgungsleitung 8 angebrachten Sensor 12 beispielsweise zum Erfassen eines Stromverbrauchs oder eines Flüssigkeitsdurchflusses oder Gasdurchflusses. Alternativ kann es sich bei dem Funkknoten 10 auch um eine Aktoreinrichtung zur Vornahme bestimmter Handlungen oder Maßnahmen oder um eine Kombination einer Sensoreinrichtung und einer Aktoreinrichtung handeln.

Die von dem Sensor 12 gemessenen Messdaten werden an die Steuerungseinheit 13 übertragen. Beispielsweise verarbeitet die Steuerungseinheit 13 die Messdaten und speichert diese anschließend im Speicher 14 ab. Alternativ können die Messdaten direkt, also ohne eine Verarbeitung durch die Steuerungseinheit 13, im Speicher 14 abgespeichert werden. Die Steuerungseinheit 13 kann auf die im Speicher 14 gespeicherten, und z. B. verarbeiteten, Messdaten zugreifen und diese über die Antenne 11 mittels einer Uplink-Übertragung über das Gateway 2 und den Network-Server 3 an den Application-Server 5 aussenden. Der Application-Server 5 verarbeitet, verwaltet und/oder interpretiert die von den Funkknoten 10 stammenden Daten. Hierdurch kann z. B. der von dem Sensor 12 gemessene Verbrauch analysiert werden und insbesondere mit einem Endkunden abgerechnet werden.

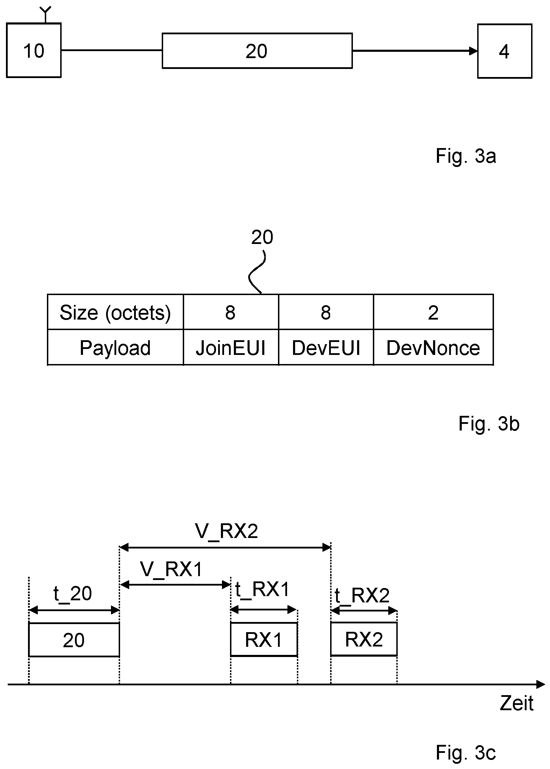

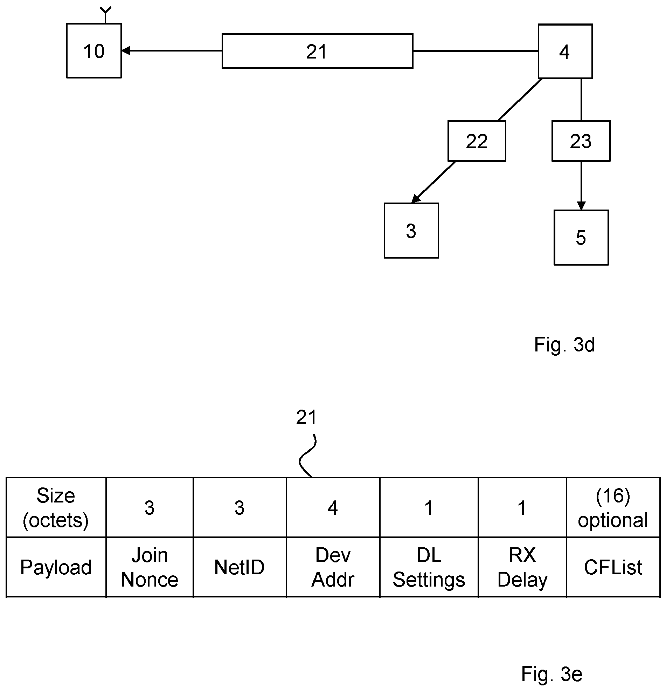

Der Funkknoten 10 muss einem LoRaWAN 1 beitreten, um innerhalb des LoRaWAN 1 kommunizieren zu können. Hierfür wird der Beitrittsvorgang, ein sogenannter Join-Vorgang, durchgeführt. Der Beitrittsvorgang wird von dem Funkknoten 10 gestartet und umfasst eine Beitrittsanfrage 20, ein sogenanntes Join-Request, vgl. Fig. 3a und 3b, das vom Funkknoten 10 ausgesendet wird. Ferner umfasst der Beitrittsvorgang eine Beitrittsbestätigung 21, ein sogenanntes Join-Accept, vgl. Fig. 3d und 3e, das vom Funkknoten 10 empfangen wird. Der Beitrittsvorgang ist in den Figuren 3a-3e schematisch dargestellt und wird nachfolgend beschrieben.

Ein Beitrittsvorgang wird üblicherweise bei der Inbetriebnahme eines Funkknotens 10 durchgeführt. Der Beitrittsvorgang wird vom Funkknoten 10 auch dann gestartet, wenn der Funkknoten 10 keine Verbindung mehr zu dem Network-Server 3 hat. Dies wird vom Funkknoten 10 beispielsweise festgestellt, wenn er über einen längeren Zeitraum trotz einer Reduktion der Datenrate und damit einhergehender Vergrößerung der Reichweite keine Downlink-Übertragung von dem Network-Server 3 erhalten hat. Zudem kann ein Beitrittsvorgang auch dann durchgeführt werden, wenn der Funkknoten 10 neu konfiguriert bzw. rekonfiguriert wird. In diesem Fall wird dem Funkknoten 10 ein neues LoRaWAN 1 zugeordnet, welchem der Funkknoten 10 beitreten muss.

Für die Durchführung eines Beitrittsvorgangs soll im Funkknoten 10 eine DevEUI (Funkknoten Kennzeichnung) vorliegen. Die DevEUI ist eine globale Funkknoten-Identifikationsnummer, welche den Funkknoten 10 eindeutig identifiziert. Zudem soll dem Funkknoten 10 ein JoinEUl (Beitrittsserver Kennzeichnung) vorliegen, welche eine weltweite Anwendungs-Identifikationsnummer ist und den Beitrittsserver 4 des LoRaWAN 1 weltweit eindeutig identifiziert. Ferner soll im Funkknoten 10 ein AppKey (Anwendungsschlüssel) vorliegen. Der AppKey ist speziell diesem Funkknoten 10 zugeordnet und wird verwendet um eine empfangene Beitrittsbestätigung 21 zu verarbeiten, wie unten beschrieben ist.

Der Beitrittsvorgang wird von dem Funkknoten 10 gestartet bzw. initialisiert, indem dieser die Beitrittsanfrage 20 an den Beitrittsserver 4 aussendet, vgl. Fig. 3a. Die Beitrittsanfrage 20, vgl. Fig. 3b, umfasst in seiner Payload bzw. seinen Nutzdaten den JoinEUl, den DevEUl und eine DevNonce. Der JoinEUl und der DevEUI weisen eine Größe von jeweils 8 Oktetts bzw. Bytes auf, der DevNonce hat eine Größe von 2 Oktetts. Der DevNonce ist hierbei ein Zähler, welcher mit jeder ausgesendeten Beitrittsanfrage 20 inkrementiert wird. Die Beitrittsanfrage 20 wird vom Funkknoten 10 an den Beitrittsserver 4 übertragen. Die Übertagung der Beitrittsanfrage 20 dauert eine bestimmte Zeit t_20. Zweckmäßigerweise versetzt sich der Funkknoten 10 nach dem Aussenden der Beitrittsanfrage 20 in einen Ruhemodus 25 bzw. Sleepmodus, in welchem insbesondere lediglich die Funkaktivität des Funkknotens heruntergefahren bzw. abgeschaltet ist, während andere Aktivitäten, wie z. B. Sensoraktivitäten und/oder Aktoraktivitäten, weiterhin gewährleistet sind. Infolgedessen wird der Energieverbrauch des Funkknotens weiter reduziert.

Im Anschluss an das Aussenden der Beitrittsanfrage 20 öffnet der Funkknoten 10 ein erstes Empfangsfenster RX1, um eine Beitrittsbestätigung 21 zu empfangen, siehe Fig. 3c. Das erste Empfangsfenster RX1 wird einen bestimmten Zeitabstand V_RX1 nach der Beendigung des Aussendens der Beitrittsanfrage 20 geöffnet. Der Zeitabstand V_RX1 berechnet sich ab dem Ende der Aussendung der Beitrittsanfrage 20 und ist beispielsweise ein Zeitwert zwischen 1 s und 15 s. Das erste Empfangsfenster RX1 ist eine bestimmte Zeitdauer t_RX1 geöffnet, die der Funkknoten 10 benötigt, um die Beitrittsbestätigung 21 zu empfangen. Sobald die Zeitdauer t_RX1 abgelaufen ist, wird das erste Empfangsfenster RX1 wieder geschlossen. Zweckmäßigerweise versetzt sich der Funkknoten 10 nach dem Schließen des ersten Empfangsfensters RX1 in den Ruhemodus.

Für den Fall, dass der Funkknoten 10 während des ersten Empfangsfensters RX1 keine Beitrittsbestätigung 21 empfangen hat, öffnet der Funkknoten 10 ein zweites Empfangsfenster RX2, welches in einem bestimmten Zeitabstand V_RX2, z. B. ein Zeitwert zwischen 2 s und 16 s, nach dem Beenden der Aussendung der Beitrittsanfrage 20 geöffnet wird. Das zweite Empfangsfenster RX2 wird somit nach dem ersten Empfangsfenster RX1, insbesondere zeitlich beabstandet zu diesem, geöffnet. Das zweite Empfangsfenster RX2 ist ebenfalls eine bestimmte Zeitdauer t_RX2 geöffnet, die der Funkknoten 10 benötigt, um die Beitrittsbestätigung 21 zu empfangen. Nach Ablauf der Zeitspanne t_RX2 wird das zweite Empfangsfenster RX2 wieder geschlossen. Zweckmäßigerweise versetzt sich der Funkknoten 10 nach dem Schließen des zweiten Empfangsfensters RX2 in den Ruhemodus.

Die Beitrittsanfrage 20 des Funkknotens 10 wird von dem Beitrittsserver 4 empfangen. Der Beitrittsserver 4 prüft daraufhin, ob der Funkknoten 10 dem LoRaWAN 1 beitreten darf. Falls der Funkknoten 10 dem LoRaWAN 1 beitreten darf, sendet der Beitrittsserver 4 die Beitrittsbestätigung 21 als Antwort auf die Beitrittsanfrage 20 des Funkknotens 10 aus, wie in Fig. 3d dargestellt. Die Beitrittsbestätigung 21 umfasst in seiner Payload bzw. seinen Nutzdaten verschiedene Informationen, wie in Fig. 3e gezeigt wird. Die Beitrittsbestätigung 21 umfasst eine JoinNonce, welche ein sich nicht-wiederholender Wert ist, der vom Beitrittsserver 4 zur bereitgestellt wird. Zudem umfasst die Beitrittsbestätigung 21 eine NetID (Netzwerk Kennzeichnung), eine DevAddr (Funkknotenadresse), DLSettings (Downlink Konfigurationseinstellungen), eine RXDelay (Verzögerungszeit zwischen einer Uplink-Übertragung und einem Downlink-Empfang) und optional eine CFList (Liste mit Netzwerkparametern).

Die Beitrittsbestätigung 21 wird vom Funkknoten 10 innerhalb des ersten Empfangsfensters RX1 oder des zweiten Empfangsfensters RX2 empfangen. Der Funkknoten 10 leitet aus der JoinNonce der Beitrittsbestätigung 21 mit Hilfe des ihm bekannten AppKey den Netzwerksitzungsschlüssel bzw. Network-Session-Key (NwkSKey) 22 und den Anwendungssitzungsschlüssel bzw. Application-Session-Key (AppSKey) 23 ab. Der Network-Session-Key 22 und der Application-Session-Key 23 werden zudem ebenfalls vom Beitrittsserver 4 generiert. Der Beitrittsserver 4 überträgt den Network-Session-Key 22 an den Network-Server 3 und den Application-Session-Key 23 an den Application-Server 5, vgl. Fig. 3d. Der Network-Session-Key 22 wird innerhalb des LoRaWAN 1 vom Network-Server 3 und vom Funkknoten 10 dazu verwendet, die Datenintegrität sicherzustellen. Der Application-Session-Key 23 wird vom Application-Server 5 und vom Funkknoten 10 zu Verschlüsselung und Entschlüsselung von übertragenen Daten verwendet.

Somit sind nach Abschluss des Beitrittsvorgangs der Network-Session-Key 22 dem Network-Server 3 und dem Funkknoten 10 bekannt. Der Application-Session-Key 23 ist dem Application-Server 5 und dem Funkknoten 10 bekannt. Infolgedessen können der Funkknoten 10 und der Network-Server 3 bzw. der Application-Server 5 miteinander kommunizieren. Der Beitrittsvorgang wurde somit erfolgreich abgeschlossen.

In manchen Fällen kann es vorkommen, dass der Beitrittsvorgang zwar von dem Funkknoten 10 gestartet wird, dieser aber nicht erfolgreich abgeschlossen wird. In solchen Fällen empfängt der Funkknoten 10 auf eine ausgesendete Beitrittsanfrage 20 keine Beitrittsbestätigung 21. Ein solcher Fall kann beispielsweise vorliegen, wenn der Beitrittsserver 4, die Beitrittsanfrage 20 des Funkknotens 10 ablehnt. Alternativ kann es passieren, dass der Beitrittsserver 4 die Beitrittsanfrage 20 gar nicht empfängt, weil er sich außerhalb der Reichweite des Funkknotens 10 befindet oder weil er ausgeschaltet ist.

In solchen Fällen startet der Funkknoten 10 weitere Beitrittsvorgänge. Er versendet also immer wieder eine Beitrittsanfrage 20 und öffnet daraufhin die Empfangsfenster RX1 bzw. RX2. Hierbei verbraucht der Funkknoten 10 viel Energie. Dadurch kann die Batterie 15 vorzeitig aufbraucht werden, sodass die vorgesehene Standzeit von mehreren Jahren nicht erreicht wird.

Erfindungsgemäß ist dem Aussenden einer Beitrittsanfrage 20 und/oder dem Öffnen des mindestens einen Empfangsfensters RX1 bzw. RX2 und/oder dem Empfangen der Beitrittsbestätigung 21 ein Energieverbrauch zugewiesen. Hierbei hängt der zugewiesene Energieverbrauch insbesondere von der Übertragungsdauer der Beitrittsanfrage 20 und/oder der aktiven Zeit des Funkknotens im Empfangsmodus ab.

Dieser zugewiesene Energieverbrauch fließt in ein Energiebudget des Funkknotens 10 ein. Auf Basis des Energiebudgets wird das Aussenden oder Nicht-Aussenden einer Beitrittsanfrage 20 gesteuert. Ein Entscheidungskriterium kann hierbei beispielsweise die aktuelle Kapazität der Batterie 15 und/oder der Energieverbrauch in der letzten Zeit, z. B. der letzten Stunde oder des letzten Tages, und/oder die Anzahl der bereits ausgesendeten Beitrittsanfragen 20 und/oder der Ablauf einer vorbestimmten Zeit seit dem Aussenden einer Beitrittsanfrage 20 sein. Durch ein Nicht-Aussenden einer Beitrittsanfrage 20 kann der Funkknoten 10 Energie sparen.

Der zugewiesene Energieverbrauch kann empirisch ermittelt oder geschätzt werden. Insbesondere handelt es sich bei dem zugewiesenen Energieverbrauch um das arithmetische Mittel des Energiebedarfs des Aussendens der Beitrittsanfrage 20 und/oder des Öffnens der mindestens zwei Empfangsfenster RX1 bzw. RX2 und/oder des Empfangens der Beitrittsbestätigung 21, welcher bei unterschiedlichen Einbausituationen und/oder Umgebungsbedingungen, z. B. unterschiedliche Temperaturen und/oder unterschiedliche Luftfeuchten, vorzugsweise experimentell, bestimmt wird. Alternativ kann der zugewiesene Energieverbrauch in Bezug auf eine geographische Einbausituation des Funkknotens, z. B. in warmen Regionen oder in kalten Regionen geschätzt werden.

Zweckmäßigerweise liegt das Energiebudget des Funkknotens 10 in Form eines Credit-Punkte-Systems vor. Das Credit-Punkte-System umfasst einen Credit-Punkte-Stand N, der die dem Funkknoten 10 aktuell zur Verfügung stehende elektrische Energie oder elektrische Leistung widerspiegelt. Der Credit-Punkte-Stand N besagt somit, wie viel Energie dem Funkknoten 10 momentan bereitgestellt wird bzw. wie viel Energie der Funkknoten 10 momentan verbrauchen kann. Vorzugsweise wird in Abhängigkeit des Credit-Punkte-Stands N das Aussenden oder Nicht-Aussenden einer Beitrittsanfrage 20 gesteuert. Das Credit-Punkte-System wird zweckmäßigerweise von der Steuerungseinheit 13 des Funkknotens 10 gesteuert.

Der Credit-Punkte-Stand N umfasst eine sich verändernde Anzahl von Credit-Punkten. Ein Credit-Punkt entspricht hierbei einem bestimmten Energiebedarf. Insbesondere kann es bei einem Credit-Punkt um eine bestimmte Menge von elektrischer Energie oder elektrischer Leistung handeln. Zweckmäßigerweise ist ein Credit-Punkt eine ganze Zahl.

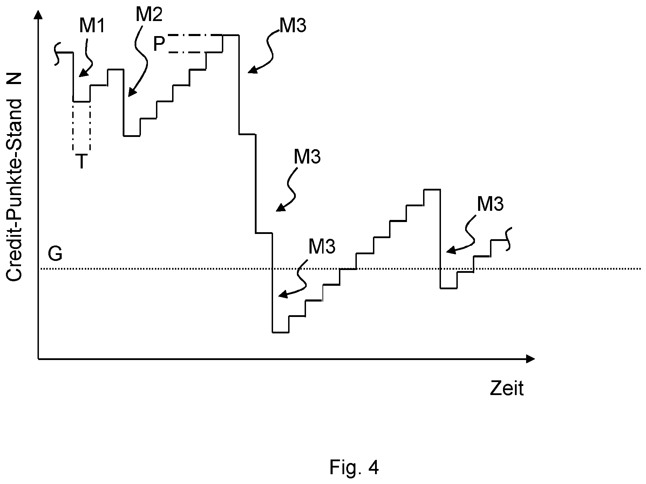

Wie in Fig. 4 gezeigt ist, ändert sich der Credit-Punkte-Stand N fortlaufend. Der Credit-Punkte-Stand N wird hierbei pro Zeiteinheit T um eine vorbestimme Zahl von Credit-Punkten P erhöht. Die vorbestimmte Zahl von Credit-Punkten P ist insbesondere größer oder gleich 1. Insbesondere wird die vorbestimmte Zahl von Credit-Punkte P dem aktuellen Credit-Punkte-Stand N hinzuaddiert bzw. zugerechnet. Somit steigt die dem Funkknoten 10 momentan zur Verfügung stehende Energie über die Zeit an. Bei der Zeiteinheit T handelt es sich um eine bestimmte Anzahl von Sekunden, Minuten, Stunden oder Tagen.

Wie in Fig. 4 gezeigt, kann der Credit-Punkte-Stand N das gesamte Energiebudget der Funkkommunikation des Funkknotens 10 darstellen, wobei z. B. alle weiteren Kommunikationen mit ihrem Energieverbrauch in das Credit-Punkte-System einfließen. Beim Versenden einer Uplink-Übertragung und/oder bei einem Empfangen einer Downlink-Übertragung wird der Credit-Punkte-Stand N des Funkknotens 10 beispielsweise um eine vorbestimmte Zahl von Credit-Punkten M1, M2 reduziert, vgl. Fig. 4. Jeder Art von Uplink-Übertragung oder Downlink-Übertragung ist eine vorbestimmte Zahl von Credit-Punkten M1, M2 in Abhängigkeit des benötigten Energiebedarfs der Übertragung zugeordnet. So benötigt z. B. das Aussenden von Messwerten nur wenig Energie, wodurch der Credit-Punkte-Stand N nur um wenige Credit-Punkte M1 reduziert wird. Bestimmte Uplink- oder Downlink-Übertragungen, z. B. Synchronisationen und Firmware-Aktualisierungen, benötigten hingegen mehr Energie, weshalb bei diesen Uplink- oder Downlink-Übertragungen der Credit-Punkte-Stand N um eine größere Zahl von Credit-Punkten M2 reduziert wird.

Fig. 4. zeigt exemplarisch den zeitlichen Verlauf des Credit-Punkte-Stands N. Der Credit-Punkte-Stand N wird zunächst aufgrund einer Uplink- oder Downlink-Übertragung um eine Zahl von Credit-Punkten M1 reduziert. Anschließend steigt der Credit-Punkte-Stand N über zwei Zeiteinheiten T wieder an, wobei der Credit-Punkte-Stand N pro Zeiteinheit T um eine bestimmte Zahl von Credit-Punkten P erhöht wird. Durch eine weitere Uplink- oder Downlink-Übertragung wird der Credit-Punkte-Stand N erneut um eine Zahl von Credit-Punkten M2 reduziert. Anschließend steigt der Credit-Punkte-Stand N wieder an.

Wenn der Funkzähler 10 nun beispielsweise den Funkkontakt zu dem LoRaWAN 1 verliert startet der Funkzähler 10 den Beitrittsvorgang und sendet eine Beitrittsanfrage 20 aus. Der Beitrittsanfrage 20 und/oder dem Öffnen des mindestens einen Empfangsfensters ist eine vorbestimmte Zahl von Credit-Punkten M3 zugeordnet, die den zugewiesenen Energieverbrauch widerspiegelt. Wenn eine Beitrittsanfrage ausgesendet wird, wird der Credit-Punkte-Stand N um die vorbestimmte Zahl von Credit-Punkten M3 reduziert. Wenn der Funkknoten 10 keine Beitrittsbestätigung 21 erhält, wird die Beitrittsanfrage 20 mehrmals ausgesendet und dem Credit-Punkte-Stand N die vorbestimmte Zahl von Credit-Punkten M3 mehrmals reduziert, siehe Fig. 4.

Der Credit-Punkte-Stand N umfasst ferner einen Grenzwert G, der einer bestimmten Anzahl von Credit-Punkten entspricht. Sobald der Credit-Punkte-Stand N den Grenzwert G erreicht bzw. unterschreitet, werden keine Beitrittsanfragen 20 mehr ausgesendet. Infolgedessen steigt der Credit-Punkte-Stand N wieder an, bis der Grenzwert G wieder überschritten ist und eine neue Beitrittsanfrage 20 ausgesendet wird. Demzufolge wird das Aussenden einer Beitrittsanfrage 20 ausgesetzt, solange der Credit-Punkte-Stand N unterhalb des Grenzwertes G ist. Hierdurch kann der Funkknoten 10 in effektiver Weise Energie einsparen.

Alternativ kann der Credit-Punkte-Stand N des Funkknotens 10 das Energiebudget nur für die Durchführung von Beitrittsvorgängen darstellen. Hierbei werden weitere Funkkommunikationen in das Energiebudget nicht mit einbezogen.

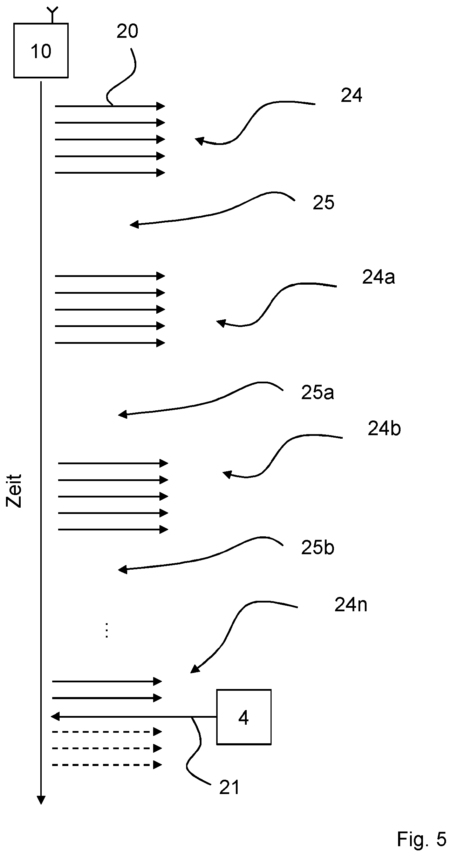

Mehrere ausgesendete Beitrittsanfragen 20 eines Funkknotens 10, können, wie in Fig. 5 dargestellt, zu einem Burst 24 zusammengefasst werden. Ein Burst 24 umfasst beispielsweise fünf ausgesendete Beitrittsanfragen 20. Die einzelnen Beitrittsanfragen 20 des Bursts 24 sind hierbei zueinander zeitlich beabstandet, insbesondere derart, dass der Funkknoten 10 genügend Zeit hat, das mindestens eine Empfangsfenster RX1 bzw. RX2 zu öffnen. Während des Aussenden des Burst 24 befindet sich der Funkknoten 10 in einem Aktivmodus. Nach dem Aussenden des Bursts 24 wird das Aussenden der Beitrittsanfragen 20 ausgesetzt und der Funkknoten 10 begibt sich in einen Ruhemodus 25 und sendet keine Beitrittsanfragen 20 mehr aus.

Nach einer vorbestimmten Zeitspanne wird der Ruhemodus 25 des Funkknotens 10 wieder beendet und der Funkknoten 10 sendet erneut einen Burst 24a aus. Somit werden die Bursts 24 in bestimmten Intervallen ausgesendet. Anschließend begibt sich der Funkknoten 10, sofern er keine Beitrittsbestätigung 21 empfangen hat, wieder in den Ruhemodus 25.

Die Zeitspanne des Ruhemodus 25 bzw. die Sendeintervalle der Bursts werden jedes Mal verlängert. So ist die Zeitspanne des Ruhemodus 25a nach dem zweiten Burst 24a länger als die Zeitspanne des Ruhemodus 25 nach dem ersten Burst 24. Die Zeitspanne des dritten Ruhemodus 25b ist wiederrum länger als die Zeitspanne des zweiten Ruhemodus 25a. Durch ein Ansteigen der Zeitdauer des Ruhemodus 25 wird in einfacher Weise Energie eingespart.

Dieses Vorgehen wird so lange wiederholt, bis der Funkknoten 10 eine Beitrittsbestätigung 21 empfängt. Dies wird am Burst 24n der Fig. 5 beispielhaft dargestellt. Hierbei empfängt der Funkknoten 10 während des Bursts 24n als Antwort auf die zweite ausgesendete Beitrittsanfrage 20 eine Beitrittsbestätigung 21 vom Beitrittsserver 4. Der Funkknoten 10 ist nun dem LoRaWAN 1 beigetreten und der Beitrittsvorgang ist erfolgreich abgeschlossen. Infolgedessen werden die verbleibenden Beitrittsanfragen 20 des Bursts 24n (in der Fig. 5 gestrichelt dargestellt) nicht mehr ausgesendet.

Alternativ oder zusätzlich kann der Burst 24 durch ein Zeitlimit begrenzt sein, nach welchem der Funkknoten 10 keine Beitrittsanfragen 20 mehr aussendet. Zweckmäßigerweise sendet der Funkknoten 10 in einem vorbestimmten Zeitraum keine Beitrittsanfragen 20 aus. Hierdurch kann der Funkknoten 10 in dem Zeitraum, in welchem keine Bursts 24 ausgesendet werden, z. B. über ein zweites Netzwerkprotokoll kommunizieren.

Vorteilhafterweise unterstützt der Funkknoten 10 ein zweites Netzwerkprotokoll, wobei es sich hierbei bei dem LoRaWAN-Netzwerkprotokoll um das erste Netzwerkprotokoll handelt. Der Funkknoten 10 kann also zusätzlich zu dem LoRaWAN-Netzwerkprotokoll über das zweite Netzwerkprotokoll kommunizieren. Zweckmäßigerweise ist entweder das erste Netzwerkprotokoll oder das zweite Netzwerkprotokoll aktiv, es kann also zu einem bestimmten Zeitpunkt nur über ein Netzwerkprotokoll kommuniziert werden. Somit wird beispielsweise beim Aussenden der Bursts 24 das zweite Netzwerkprotokoll ausgesetzt.

Beispielsweise handelt es sich bei dem zweiten Netzwerkprotokoll um das M-BUS-Netzwerkprotokoll, insbesondere um den M-BUS Mode-C.

### BEZUGSZEICHENLISTE

- 1: LoRaWAN
- 2: Gateway
- 3: Network-Server
- 4: Beitrittsserver
- 5: Application-Server
- 6: Datenübertragung
- 7: Datenübertragung
- 8: Versorgungsleitung
- 10: Funkknoten
- 11: Antenne
- 12: Sensor
- 13: Steuerungseinheit
- 14: Speicher
- 15: Batterie

- 20: Beitrittsanfrage
- 21: Beitrittsbestätigung
- 22: Network Session Key
- 23: Application Session Key
- 24-24n: Burst
- 25-25n: Ruhemodus

## Patentansprüche

1. Verfahren zum Betrieb eines batteriebetriebenen Funkknotens (10), wobei der Funkknoten (10) ein Low Power Wide Area Network, LPWAN,-Netzwerkprotokoll unterstützt,
wobei der Funkknoten (10) zum Verbindungsaufbau mit einem LPWAN mindestens einen Beitrittsvorgang startet,
wobei der Funkknoten (10) für den Beitrittsvorgang eine Beitrittsanfrage (20) aussendet, und
wobei der Funkknoten (10) nach dem Aussenden der Beitrittsanfrage (20) mindestens ein Empfangsfenster (RX1, RX2) öffnet,
**dadurch gekennzeichnet, dass**
der Beitrittsanfrage (20) ein Energieverbrauch zugewiesen wird,
der der Beitrittsanfrage (20) zugewiesene Energieverbrauch in ein Energiebudget eingeht, und
in Abhängigkeit des Energiebudgets das Aussenden oder Nicht-Aussenden einer Beitrittsanfrage (20) gesteuert wird.

2. Verfahren nach Anspruch 1, **dadurch gekennzeichnet, dass** der zugewiesene Energieverbrauch von der Übertragungsdauer der Beitrittsanfrage (20) abhängt und/oder
dass der zugewiesene Energieverbrauch zusätzlich das Öffnen des mindestens einen Empfangsfensters (RX1, RX2) umfasst, wobei der zugewiesene Energieverbrauch der Empfangsfenster (RX1, RX2) insbesondere von der aktiven Zeit des Funkknotens (10) im Empfangsmodus abhängt.

3. Verfahren nach einem der vorhergehenden Ansprüche, **dadurch gekennzeichnet, dass** der zugewiesene Energieverbrauch empirisch ermittelt oder geschätzt wird.

4. Verfahren nach einem der vorhergehenden Ansprüche, **dadurch gekennzeichnet, dass** das Energiebudget als Credit-Punkte-System geführt wird, wobei das Credit-Punkte-System einen Credit-Punkte-Stand (N) umfasst.

5. Verfahren nach Anspruch 4, **dadurch gekennzeichnet, dass** der der Beitrittsanfrage (20) zugewiesene Energieverbrauch einer vorbestimmten Zahl von Credit-Punkten (M3) zugeordnet ist, wobei insbesondere vorgesehen ist, dass der Credit-Punkte-Stand (N) wegen Aussenden der Beitrittsanfrage (20) um die zugeordnete Zahl von Credit-Punkten (M3) reduziert wird.

6. Verfahren nach Anspruch 4 oder 5, **dadurch gekennzeichnet, dass** der Credit-Punkte-Stand (N) des Funkknotens (10) pro verstrichener Zeiteinheit (T) um eine vorbestimmte Zahl von Credit-Punkten (P) erhöht wird und/oder dass keine Beitrittsanfrage (20) ausgesendet wird, wenn der Credit-Punkte-Stand (N) des Funkknotens (10) einen Grenzwert (G) erreicht.

7. Verfahren nach einem der vorhergehenden Ansprüche, **dadurch gekennzeichnet, dass** in Abhängigkeit des Energiebudgets mehrere Beitrittsanfragen (20) gebündelt in Form eines Bursts (24-24a) ausgesendet werden, wobei insbesondere vorgesehen ist, dass mehrere Bursts (24-24n), insbesondere zeitlich beabstandet zueinander, ausgesendet werden.

8. Verfahren nach einem der vorhergehenden Ansprüche, **dadurch gekennzeichnet, dass** nach einer vorbestimmten Anzahl von ausgesendeten Beitrittsanfragen (20) oder von ausgesendeten Beitrittsanfragen (20) pro Zeit oder nach Ablauf einer vorbestimmten Zeit das Aussenden von Beitrittsanfragen (20) pausiert wird.

9. Verfahren nach einem der vorhergehenden Ansprüche, **dadurch gekennzeichnet, dass** der Funkknoten (10) in einem vorbestimmten Zeitraum keine Beitrittsanfragen (20) aussendet.

10. Verfahren nach einem der vorhergehenden Ansprüche, **dadurch gekennzeichnet, dass** der Funkknoten (10)
- nach dem Aussenden der Beitrittsanfrage (20); und/oder
- nach dem Schließen eines Empfangsfensters (RX1, RX2); und/oder
- nach dem Empfangen einer Beitrittsbestätigung (21); und/oder
- nach einem Burst (24-24n)
in einen Ruhemodus (25-25n) übergeht.

11. Verfahren nach einem der vorhergehenden Ansprüche, **dadurch gekennzeichnet, dass** der Funkknoten (10) ein zweites Netzwerkprotokoll unterstützt, wobei das LPWAN-Netzwerkprotokoll das erste Netzwerkprotokoll ist und das zweite Netzwerkprotokoll insbesondere M-Bus, insbesondere M-BUS Mode C, ist.

12. Verfahren nach einem der vorhergehenden Ansprüche, **dadurch gekennzeichnet, dass** das mindestens eine Empfangsfenster (RX1, RX2) in einem bestimmten Zeitabstand (V_RX1, V_RX2) nach dem Ende der Beitrittsanfrage (20) geöffnet wird.

13. Verfahren nach einem der vorhergehenden Ansprüche, **dadurch gekennzeichnet, dass** ein erstes Empfangsfenster (RX1) und ein zweites Empfangsfenster (RX2) vorgesehen sind und das zweite Empfangsfenster (RX2) geöffnet wird, wenn in dem ersten Empfangsfenster (RX1) keine Beitrittsbestätigung (21) empfangen wird, wobei insbesondere vorgesehen ist, dass das zweite Empfangsfenster (RX2) nach dem ersten Empfangsfenster (RX1) geöffnet wird.

14. Verfahren nach einem der vorhergehenden Ansprüche, **dadurch gekennzeichnet, dass** das Aussenden und/oder nicht-Aussenden der Beitrittsanfrage (20) von einer Steuerungseinheit (13) des Funkknotens (10) gesteuert wird.

15. Verfahren nach einem der vorhergehenden Ansprüche, **dadurch gekennzeichnet, dass** es sich bei dem Low Power Wide Area Network ,LPWAN, -Netzwerkprotokoll um das Long Range Wide Area Network, LoRaWAN,-Netzwerkprotokoll oder das MIOTY-Netzwerkprotokoll handelt.

16. Funkknoten (10) umfassend
eine Antenne (11),
eine Steuerungseinheit (13),
eine Batterie (15) sowie
eine Sensoreinrichtung und/oder eine Aktoreinrichtung,
**dadurch gekennzeichnet, dass**
der Funkknoten (10) zur Durchführung des Verfahrens nach einem der vorhergehenden Ansprüche hergerichtet ist.

## Claims

1. Method for operating a battery-powered wireless node (10), wherein the wireless node (10) supports a Low Power Wide Area Network, LPWAN, network protocol,
wherein the wireless node (10) starts at least one joining process in order to set up a connection to a LPWAN,
wherein the wireless node (10) sends a joining request (20) for the joining process, and
wherein the wireless node (10) opens at least one receive window (RX1, RX2) after sending the joining request (20), **characterized in that**
the joining request (20) is allocated an energy consumption,
the energy consumption allocated to the joining request (20) is incorporated in an energy budget, and
the sending or not-sending of a joining request (20) is controlled according to the energy budget.

2. Method according to Claim 1, **characterized in that** the allocated energy consumption depends on the transmission time length of the joining request (20), and/or
**in that** the allocated energy consumption additionally comprises the opening of the at least one receive window (RX1, RX2), wherein the allocated energy consumption of the receive windows (RX1, RX2) depends in particular on the active time of the wireless node (10) in the receive mode.

3. Method according to any of the preceding claims, **characterized in that** the allocated energy consumption is determined empirically or estimated.

4. Method according to any of the preceding claims, **characterized in that** the energy budget is conducted as a credit point system, wherein the credit point system comprises a credit point score (N).

5. Method according to Claim 4, **characterized in that** the energy consumption allocated to the joining request (20) is associated with a predetermined number of credit points (M3), wherein it is in particular provided that the credit point score (N) is reduced by the associated number of credit points (M3) because of the joining request (20) being sent.

6. Method according to Claim 4 or 5, **characterized in that** the credit point score (N) of the wireless node (10) is increased for each elapsed unit of time (T) by a predetermined number of credit points (P), and/or **in that** no joining request (20) is sent if the credit point score (N) of the wireless node (10) reaches a limit value (G).

7. Method according to any of the preceding claims, **characterized in that** a plurality of joining requests (20) are sent bundled in the form of a burst (24-24a) according to the energy budget, wherein it is in particular provided that a plurality of bursts (24-24n) are sent, in particular mutually spaced in time.

8. Method according to any of the preceding claims, **characterized in that** the sending of joining requests (20) is paused after a predetermined number of sent joining requests (20) or of sent joining requests (20) per unit of time, or after a predetermined time has elapsed.

9. Method according to any of the preceding claims, **characterized in that** the wireless node (10) sends no joining requests (20) in a predetermined time period.

10. Method according to any of the preceding claims, **characterized in that** the wireless node (10) goes into an idle mode (25-25n)
- after sending the joining request (20); and/or
- after closing a receive window (RX1, RX2); and/or
- after receiving a joining acceptance (21); and/or
- after a burst (24-24n).

11. Method according to any of the preceding claims, **characterized in that** the wireless node (10) supports a second network protocol, wherein the LPWAN network protocol is the first network protocol and the second network protocol is in particular M-Bus, in particular C-mode M-Bus.

12. Method according to any of the preceding claims, **characterized in that** the at least one receive window (RX1, RX2) is opened at a certain time interval (V_RX1, V_RX2) after the end of the joining request (20).

13. Method according to any of the preceding claims, **characterized in that** a first receive window (RX1) and a second receive window (RX2) are provided, and the second receive window (RX2) is opened if no joining acceptance (21) is received in the first receive window (RX1), wherein it is in particular provided that the second receive window (RX2) is opened after the first receive window (RX1).

14. Method according to any of the preceding claims, **characterized in that** the sending and/or not-sending of the joining request (20) is controlled by a control unit (13) of the wireless node (10).

15. Method according to any of the preceding claims, **characterized in that** the Low Power Wide Area Network, LPWAN, network protocol is the Long Range Wide Area Network, LoRaWAN, network protocol or the MIOTY network protocol.

16. Wireless node (10) comprising
an antenna (11),
a control unit (13),
a battery (15) and
a sensor device and/or an actuator device, **characterized in that**
the wireless node (10) is designed to implement the method according to any of the preceding claims.

## Revendications

1. Procédé de fonctionnement d'un nœud radio (10) alimenté par pile/batterie, le nœud radio (10) prenant en charge un protocole de réseau LPWAN, Low Power Wide Area Network (réseau étendu à faible puissance),
le nœud radio (10) démarrant au moins un processus d'adhésion en vue de l'établissement d'une connexion avec un LPWAN,
le nœud radio (10) émettant une demande d'adhésion (20) pour le processus d'adhésion, et
le nœud radio (10) ouvrant au moins une fenêtre de réception (RX1, RX2) après l'émission de la demande d'adhésion (20),
**caractérisé en ce que**
une consommation d'énergie est attribuée à la demande d'adhésion (20),
la consommation d'énergie attribuée à la demande d'adhésion (20) intervient dans un budget énergétique, et
l'émission ou la non-émission d'une demande d'adhésion (20) est commandée en fonction du budget énergétique.

2. Procédé selon la revendication 1, **caractérisé en ce que** la consommation d'énergie attribuée dépend de la durée de transmission de la demande d'adhésion (20) et/ou en ce que la consommation d'énergie attribuée comprend en plus l'ouverture de l'au moins une fenêtre de réception (RX1, RX2), la consommation d'énergie attribuée des fenêtres de réception (RX1, RX2) dépendant en particulier du temps d'activité du nœud radio (10) en mode réception.

3. Procédé selon l'une des revendications précédentes, **caractérisé en ce que** la consommation d'énergie attribuée est déterminée ou estimée empiriquement.

4. Procédé selon l'une des revendications précédentes, **caractérisé en ce que** le bilan énergétique est géré comme un système de points de crédit, le système de points de crédit comprenant un solde de points de crédit (N).

5. Procédé selon la revendication 4, **caractérisé en ce qu'**un nombre prédéterminé de points de crédit (M3) est affecté à la consommation d'énergie attribuée à la demande d'adhésion (20), en prévoyant notamment que le solde de points de crédit (N) est réduit du nombre affecté de points de crédit (M3) en raison de l'émission de la demande d'adhésion (20).

6. Procédé selon la revendication 4 ou 5, **caractérisé en ce que** le solde de points de crédit (N) du nœud radio (10) par unité de temps écoulée (T) est augmenté d'un nombre prédéterminé de points de crédit (P) et/ou **en ce qu'**aucune demande d'adhésion (20) n'est émise lorsque le solde de points de crédit (N) du nœud radio (10) atteint une valeur limite (G).

7. Procédé selon l'une des revendications précédentes, **caractérisé en ce qu'**en fonction du bilan énergétique, plusieurs demandes d'adhésion (20) sont émises de manière regroupée sous la forme d'une rafale (24-24a), en prévoyant notamment que plusieurs rafales (24-24n) soient émises, en particulier espacées dans le temps les unes des autres.

8. Procédé selon l'une des revendications précédentes, **caractérisé en ce que** l'émission de demandes d'adhésion (20) est interrompue après un nombre prédéterminé de demandes d'adhésion (20) émises ou de demandes d'adhésion (20) émises par unité de temps ou après écoulement d'un temps prédéterminé.

9. Procédé selon l'une des revendications précédentes, **caractérisé en ce que** le nœud radio (10) n'émet aucune demande d'adhésion (20) pendant une période de temps prédéterminée.

10. Procédé selon l'une des revendications précédentes, **caractérisé en ce que** le nœud radio (10)
- après l'émission de la demande d'adhésion (20) ; et/ou
- après la fermeture d'une fenêtre de réception (RX1, RX2) ; et/ou
- après la réception d'une confirmation d'adhésion (21) ; et/ou
- après une rafale (24-24n)
passe dans un mode veille (25-25n).

11. Procédé selon l'une des revendications précédentes, **caractérisé en ce que** le nœud radio (10) prend en charge un deuxième protocole de réseau, le protocole de réseau LPWAN étant le premier protocole de réseau et le deuxième protocole de réseau étant en particulier M-Bus, en particulier M-BUS Mode C.

12. Procédé selon l'une des revendications précédentes, **caractérisé en ce que** l'au moins une fenêtre de réception (RX1, RX2) est ouverte dans un intervalle de temps (V_RX1, V_RX2) déterminé après la fin de la demande d'adhésion (20).

13. Procédé selon l'une des revendications précédentes, **caractérisé en ce qu'**une première fenêtre de réception (RX1) et une deuxième fenêtre de réception (RX2) sont prévues et la deuxième fenêtre de réception (RX2) est ouverte lorsqu'aucune confirmation d'adhésion (21) n'est reçue dans la première fenêtre de réception (RX1), en prévoyant notamment que la deuxième fenêtre de réception (RX2) soit ouverte après la première fenêtre de réception (RX1).

14. Procédé selon l'une des revendications précédentes, **caractérisé en ce que** l'émission et/ou la non-émission de la demande d'adhésion (20) est commandée par une unité de commande (13) du nœud radio (10).

15. Procédé selon l'une des revendications précédentes, **caractérisé en ce que** le protocole de réseau LPWAN, Low Power Wide Area Network (réseau étendu à faible puissance), est le protocole de réseau LoRaWAN, Long Range Wide Area Network (réseau étendu à longue portée), ou le protocole de réseau MIOTY.

16. Nœud radio (10) comprenant
une antenne (11),
une unité de commande (13),
une pile/batterie (15) ainsi que
un dispositif détecteur et/ou un dispositif actionneur, **caractérisé en ce que**
le nœud radio (10) est préparé pour mettre en œuvre le procédé selon l'une des revendications précédentes.
